# EUROPÄISCHE PATENTSCHRIFT

(11) **EP 4 572 909 B1**
(45) Veröffentlichungstag und Bekanntmachung des Hinweises auf die Patenterteilung: **02.09.2026**
(21) Anmeldenummer: 23804915.9
(22) Anmeldetag: 19.10.2023
(51) Int. Cl.: B23K 11/11, B23K 11/30, B23K 11/36, F04B 53/02, F04B 53/14, F16K 23/00, F04B 49/10

(54) **VORRICHTUNG ZUR KÜHLMITTELVERSORGUNG UND KÜHLWASSERSYSTEM**
DEVICE FOR SUPPLYING COOLANT, AND COOLING WATER SYSTEM
DISPOSITIF D'ALIMENTATION EN FLUIDE DE REFROIDISSEMENT ET SYSTÈME D'EAU DE REFROIDISSEMENT

(30) Priorität: 21.11.2022 DE 102022212407
(43) Veröffentlichungstag der Anmeldung: 25.06.2025
(73) Patentinhaber: Klaus Guenther GmbH, 74889 Sinsheim-Steinsfurt (DE)
(72) Erfinder: GUENTHER, Christian, 74078 Heilbronn (DE)
(74) Vertreter: Ullrich & Naumann PartG mbB
(86) Internationale Anmeldenummer: PCT/DE2023/200213
(87) Internationale Veröffentlichungsnummer: WO 2024/109993

(56) Entgegenhaltungen:
- JP-A- 2008 183 578
- US-A1- 2016 067 815
- US-A1- 2022 196 009
- US-B1- 6 359 249

## Beschreibung

Die Erfindung betrifft eine Vorrichtung zur Kühlmittelversorgung einer mit fluidem Kühlmittel zu versorgenden Bearbeitungseinrichtung, beispielsweise einer Schweißeinrichtung oder eines Schweißroboters entsprechend dem Oberbegriff des Anspruchs 1 (siehe z.B US 2016/067815 A1).

Vorrichtungen zur Kühlmittelversorgung der in Rede stehenden Art sind seit Jahren aus der Praxis bekannt. Diese weisen einen Kühlmittelvorlauf und einen Kühlmittelrücklauf auf. Das Kühlmittel wird von dem Kühlmittelvorlauf durch zu kühlende Werkzeuge, beispielsweise Schweißkappen, bis zum Kühlmittelrücklauf gepumpt. Dabei werden die Werkzeuge durch das Kühlmittel gekühlt.

Wenn die Werkzeuge gewechselt werden sollen, wird zunächst der Kühlmittelkreislauf mittels zwei Schließventilen unterbrochen und anschließend in dem Kühlmittelkreislauf ein Vakuum erzeugt. Ein solches Vakuum kann beispielsweise über einen Absaugzylinder mit Volumenverstellung erzeugt werden, wie er aus der DE 10 2019 204 208 bekannt ist. Anschließend werden die Werkzeuge aus dem Kühlmittelkreislauf entfernt. Zur Betätigung des Absaugzylinders und/oder der Schließventile kann ein Signalventil genutzt werden, das beispielsweise aus der DE 10 2015 204 812 bekannt ist.

Nachteilig an dieser Konstruktion ist, dass bei Entfernen eines Werkzeugs das Vakuum im gesamten Kühlmittelkreislauf zwischen den beiden Schließventilen zusammenbricht. Dabei kann Kühlwasser aus dem Kühlmittelkreislauf austreten. Außerdem müssen die Werkzeuge in einer bestimmten Reihenfolge ausgetauscht werden, da ansonsten noch mehr Kühlwasser austreten kann. Auch bei einer Bewegung der Werkzeuge kann es aufgrund von Vibrationen zu einem Austritt von Kühlwasser kommen.

Der vorliegenden Erfindung liegt daher die Aufgabe zugrunde, eine Vorrichtung zur Kühlmittelversorgung der eingangs genannten Art derart auszugestalten und weiterzubilden, dass mit konstruktiv einfachen Mitteln ein Austritt von Kühlwasser verhindert oder minimiert wird.

Eine weitere Aufgabe ist es, ein Kühlwassersystem für eine solche Vorrichtung bereitzustellen.

Erfindungsgemäß wird die voranstehende Aufgabe durch die Merkmale des Anspruches 1 gelöst. Danach ist eine Vorrichtung zur Kühlmittelversorgung einer mit fluidem Kühlmittel, insbesondere mit Wasser, zu versorgenden Bearbeitungseinrichtung, beispielsweise einer Schweißeinrichtung oder eines Schweißroboters, vorgesehen, wobei die Bearbeitungseinrichtung zumindest zwei zu kühlende Bereiche oder zu kühlende Werkzeuge, beispielsweise Schweißkappen, aufweist, wobei die zu kühlenden Bereiche oder die zu kühlenden Werkzeuge in einen offenen oder geschlossenen Kühlmittelkreislauf mit Vorlauf und Rücklauf eingebunden sind, wobei im Rücklauf eine Unterdruckerzeugungseinheit angeordnet ist und wobei die zu kühlenden Bereiche oder die zu kühlenden Werkzeuge jeweils einen Vorlaufeingang und einen Rücklaufausgang aufweisen, dadurch gekennzeichnet, dass vor jedem Vorlaufeingang und nach jedem Rücklaufausgang der zu kühlenden Bereiche oder zu kühlenden Werkzeuge jeweils ein Ventil angeordnet ist.

Außerdem wird die Erfindung durch ein Kühlwassersystem mit einer Vorrichtung zur Kühlmittelversorgung gemäß einem der Ansprüche 1 bis 8, einer Kühlmittelquelle, einer Kühlmittelsenke, einem Kühlmittelvorlaufventil, einem Kühlmittelrücklaufventil, einem Signalgeber und einer Unterdruckerzeugungseinheit gelöst.

In erfindungsgemäßer Weise ist zunächst erkannt worden, dass durch ein Ventil vor und hinter jedem Werkzeug das Vakuum nicht im gesamten Kühlmittelkreislauf zusammenbricht, sondern lediglich lokal im Bereich der Werkzeuge. Auf diese Weise kann ein Ausfluss von Kühlwasser beim Wechsel der Werkzeuge verhindert werden. Somit können beide Werkzeuge gleichzeitig und somit schneller gewechselt werden. Außerdem wird dadurch ein Austritt von Kühlwasser während einer Bewegung der Werkzeuge verhindert.

Gemäß einer vorteilhaften Ausgestaltung der Erfindung sind die Ventile vor dem Vorlaufeingang und nach dem Rücklaufausgang als Rückschlagventile ausgebildet. Durch die Verwendung von Rückschlagventilen kann auf einfache Weise ein Zusammenbrechen des Vakuums im gesamten Kühlmittelkreislauf verhindert werden. Außerdem wird ein entstehendes Vakuum automatisch durch den gesamten Kühlmittelkreislauf durchgeschleust. Darüber hinaus sind Rückschlagventile auf einfache und kostengünstige Weise in einen bestehenden Kühlmittelkreislauf integrierbar. Rückschlagventile sind wenig bauraumintensiv und benötigen keine externe Energiezufuhr zum Betätigen. Die Rückschlagventile können dabei derart ausgerichtet sein, dass sie einen Fluss des Kühlmittels in Richtung des Rücklaufs ermöglichen und in Richtung des Vorlaufs verhindern.

In bevorzugter Weise weisen die Rückschlagventile einen minimalen Öffnungsdruck von 0,01 Bar, vorzugweise 0,02 bar, insbesondere 0,05 bar auf. Hierdurch ist eine geringe Pumpleistung der Kühlmittelversorgung ausreichend, um die Rückschlagventile zu betätigen. Somit kann eine kostengünstige Pumpe verwendet werden.

Es ist ebenfalls möglich, dass die Ventile vor dem Vorlaufeingang und nach dem Rücklaufausgang pneumatisch, elektrisch oder hydraulisch ansteuerbar sind. Ein Vorteil hiervon ist, dass die Ventile bei einem anstehenden Wechselereignis bereits vorher geschlossen werden können. Dabei kann auch eine Kombination möglich sein, bei dem einige Ventile aus Rückschlagventile und andere Ventile aktiv steuerbar ausgebildet sind.

Vorteilhafterweise kann der Kühlmittelkreislauf die zu kühlenden Bereiche oder die zu kühlenden Werkzeuge in einer Reihenschaltung kühlen. In diesem Fall ist der Kühlwasserrücklauf eines ersten Werkzeugs der Kühlwasservorlauf eines zweiten Werkzeugs. Ein Vorteil hiervon ist, dass der Kühlwasserkreislauf einfach herstellbar ist und die Prozessüberwachung durch einen Strömungssensor störungsunanfälliger durchgeführt werden kann.

In diesem Fall ist es von Vorteil, wenn ein Ventil gleichzeitig im Rücklaufausgang eines zu kühlenden Bereiches oder zu kühlenden Werkzeugs und im Vorlaufeingang eines weiteren zu kühlenden Bereiches oder zu kühlenden Werkzeugs angeordnet ist. Da der Rücklauf eines ersten Werkzeugs dem Vorlauf eines zweiten Werkzeugs entspricht, kann ein einziges Ventil verwendet werden, um die beiden Werkzeuge fluidisch voneinander zu trennen. Ein Vorteil hiervon ist, dass weniger Ventile benötigt werden.

Es ist ebenfalls möglich, dass der Kühlmittelkreislauf die zu kühlenden Bereiche oder die zu kühlenden Werkzeuge in einer Parallelschaltung kühlt. Ein Vorteil hiervon ist, dass mehrere Werkzeuge direkt an den Kühlwasservorlauf angeschlossen werden können und das Kühlwasser nicht bereits durch ein vorheriges zu kühlendes Werkzeug erhitzt worden ist. Außerdem ist der hydraulische Widerstand durch die Parallelverschlauchung niedriger und es kann bei gleichen Druckverhältnissen ein höherer Volumenstrom erreicht werden.

Gemäß der Erfindung kann bei Betätigung der Unterdruckerzeugungseinheit ein Unterdruck im Kühlmittelkreislauf im Vorlaufeingang und Rücklaufausgang jeder der zu kühlenden Bereiche oder der zu kühlenden Werkzeuge entstehen. Ein Vorteil hiervon ist, dass lediglich eine Unterdruckerzeugungseinheit benötigt wird, um ein Vakuum in allen Werkzeugen zu erzeugen.

Insbesondere kann die Unterdruckerzeugungseinheit dabei einen Absaugzylinder und/oder eine Pumpe umfassen. Die Pumpe kann beispielsweise elektrisch, pneumatisch oder hydraulisch betrieben werden. Außerdem kann die Pumpe direkt im Kühlmittelkreislauf integriert sein, oder über einen Bypass Unterdruck bereitstellen. Die Pumpe kann zum Beispiel eine Venturidüse oder eine Strahlpumpe umfassen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: Eine Übersicht über ein Kühlwassersystem gemäß einer Ausführungsform der vorliegenden Erfindung.
- Fig. 2: Ein Kühlwassersystem für eine Schweißzange gemäß einer Ausführungsform der vorliegenden Erfindung,
- Fig. 3a: eine Vorrichtung zur Kühlmittelversorgung für eine Schweißzange in Reihenschaltung gemäß einer Ausführungsform der vorliegenden Erfindung,
- Fig. 3b: eine Vorrichtung zur Kühlmittelversorgung für eine Schweißzange in Parallelschaltung gemäß einer Ausführungsform der vorliegenden Erfindung,
- Fig. 4: ein Strömungsverlauf in einem Schweißzangenschaft gemäß einer Ausführungsform der vorliegenden Erfindung.

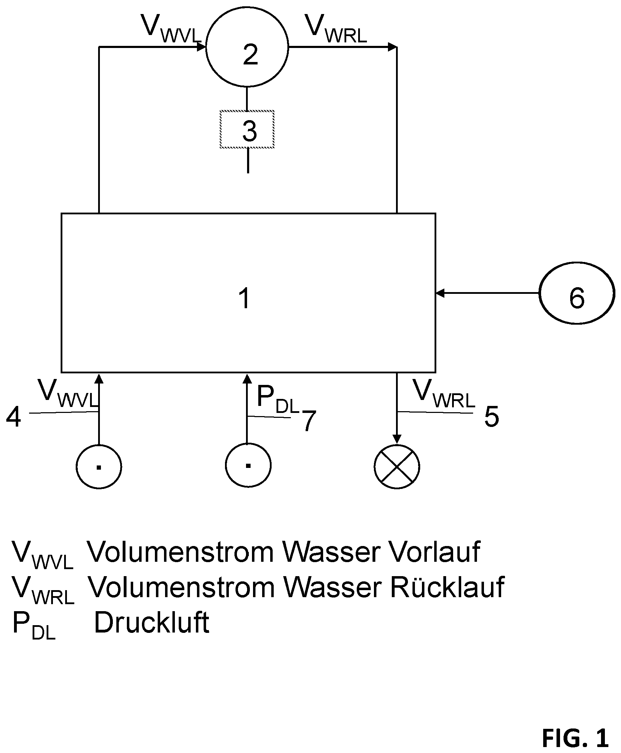

Figur 1 zeigt eine Übersicht über ein Kühlwassersystem für ein automatisiertes Schweißsystem. Eine Grundeinrichtung, hier in Form einer Roboterinstallationsplatte 1, dient als Zentrum für die Kühlwasseranschlüsse. Mittels einer Schweißzange 2 kann ein zu schweißendes Werkstück 3 geschweißt werden. Durch die beim Schweißvorgang entstehenden hohen Temperaturen muss die Schweißzange gekühlt werden.

Zur Kühlung wird Kühlwasser von einer Kühlwasserquelle 4 über die Roboterinstallationsplatte 1 zu der Schweißzange 2 geleitet. Dort kühlt das Kühlwasser die Schweißzange und wird anschließend über die Roboterinstallationsplatte zurück zu einer Kühlwassersenke 5 geleitet. Die Steuerung der Ventile innerhalb der Roboterinstallationsplatte 1 erfolgt über einen Signalgeber 6. Zur Betätigung der Ventile wird Druckluft genutzt, die über eine Druckluftquelle 7 der Roboterinstallationsplatte 1 zugeführt wird.

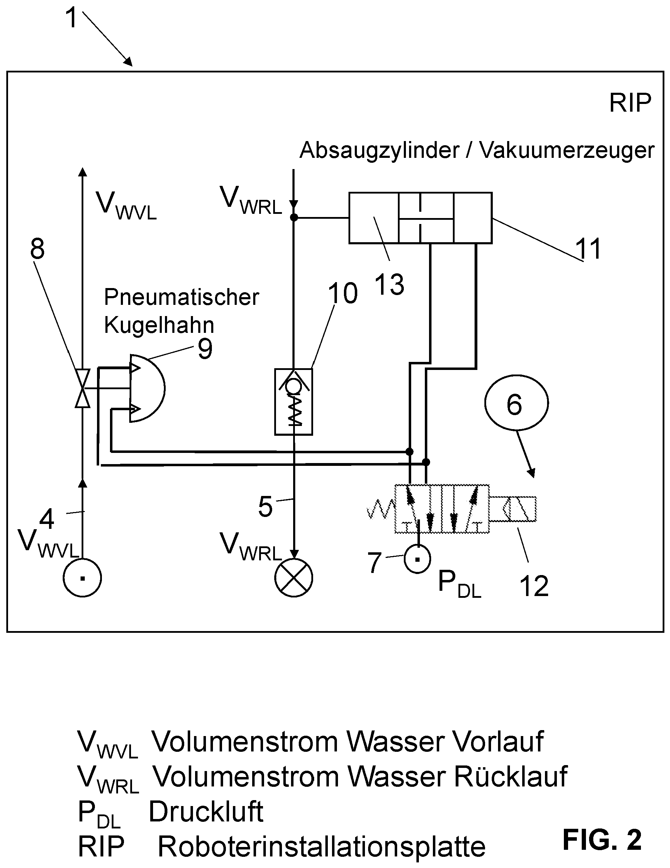

Die Roboterinstallationsplatte 1 wird in Figur 2 im Detail erläutert.

Ausgehend von der Kühlwasserquelle 4 wird Kühlwasser zu der Schweißzange 2 geleitet. Der Zufluss zur Schweißzange 2 wird über einen Kugelhahn 8 gesteuert, der über einen pneumatischen Drehantrieb 9 betätigt wird. Der Kugelhahn 8 mit dem pneumatischen Drehantrieb 9 kann auch als ein elektrisches oder hydraulisches Ventil ausgebildet sein. Mittels des Kugelhahns 8 kann der Zufluss von Kühlwasser gestoppt werden, beispielsweise bei einem Schweißkappenverlust, bei Kühlwasserschlauchplatzern, einem Schweißkappenwechsel oder anderen Prozessproblemen.

Nachdem das Kühlwasser die Schweißzange 2 gekühlt hat, wird es zu der Kühlwassersenke 5 abgeleitet. Um einen Rückfluss des Kühlwassers zu der Schweißzange 2 zu verhindern, ist ein Rückschlagventil 10 angeordnet. Das Rückschlagventil 10 kann auch als ein elektrisches, pneumatisches oder hydraulisches Ventil ausgebildet sein.

Über eine Unterdruckerzeugungseinheit, hier in Form eines Absaugzylinder 11 kann bei geschlossenem Kugelhahn 8 ein Unterdruck in dem Kühlmittelkreislauf aufgebaut werden. Der Absaugzylinder 11 kann elektrisch, pneumatisch oder hydraulisch betätigt werden. Es ist ebenfalls denkbar, dass die Unterdruckerzeugungseinheit als elektrische, pneumatische oder hydraulische Pumpe ausgebildet ist, die das Kühlwasser aus dem Kühlwasserkreislauf pumpt.

Der Kugelhahn 8 beziehungsweise der pneumatische Drehantrieb 9 und der Absaugzylinder 11 können über Druckluft betätigt werden. Hierzu ist die Druckluftquelle 7 über ein 5/2 Wegeventil 12, das mittels des Signalgebers 6 gesteuert wird, mit dem Kugelhahn 9 und dem Absaugzylinder 11 verbunden. Im ersten Zustand des Wegeventils 12 ist der pneumatischer Drehantrieb 9 geöffnet und der Absaugzylinder 11 erzeugt keinen Unterdruck. Im zweiten Zustand des Wegeventils 12 ist der Kugelhahn 8 geschlossen und ein Kolben des Absaugzylinder 11 wird eingefahren, sodass im Wirkraum 13 des Absaugzylinders 11 ein Unterdruck entsteht. Auf diese Weise wird ein Vakuum gleichzeitig mit Schließen des Ventils 8 erzeugt. Durch das Schließen des Kugelhahns 8 und durch das Rückschlagventil 13 wird verhindert, dass das Vakuum zusammenbricht.

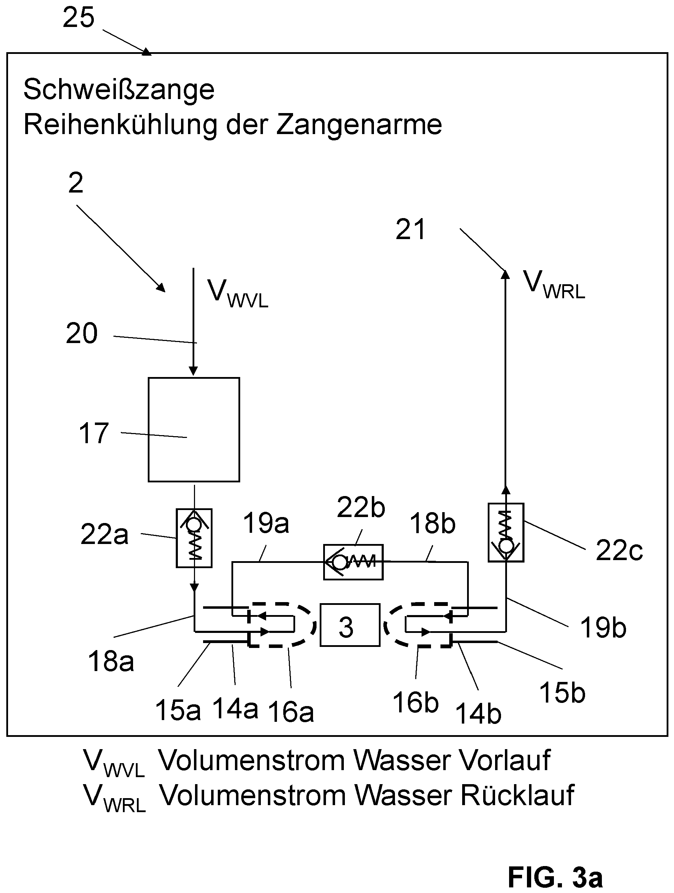

Figur 3a zeigt eine Vorrichtung zur Kühlmittelversorgung für eine Schweißzange in Reihenschaltung gemäß einer Ausführungsform der vorliegenden Erfindung.

Die Schweißzange 2 umfasst zwei Zangenarme 14a, 14b, zwischen denen das Werkstück 3 angeordnet ist. Die Zangenarme 14a, 14b umfassen jeweils einen Schaft 15a, 15b und eine Schweißkappe 16a, 16b. Mittels der Schweißkappen 16a, 16b, die lösbar an den Zangenarmen 14a, 14b angeordnet sind, kann das Werkstück 6 geschweißt werden. Dabei müssen die Schweißkappen 16a, 16b gekühlt werden. Hierzu ist ein Kühlmittelkreislauf in der Vorrichtung zur Kühlmittelversorgung 25 angeordnet.

Das Kühlmittel fließt vom Kühlmittelvorlauf 20 zunächst durch einen Transformator 17. Es ist ebenfalls denkbar, dass der Transformator 17 in einem separaten Kühlkreislauf gekühlt wird. Der Transformator 17 stellt die benötigte elektrische Energie für den Schweißvorgang zur Verfügung. Anschließend fließt das Kühlmittel durch die Zangenarme 14a, 14b, wobei die Zangenarme 14a, 14b in einer Reihenschaltung gekühlt werden. Das Kühlmittel fließt zunächst durch einen Vorlaufeingang 18a des Zangenarm 14a und anschließend wird es durch einen Rücklaufausgang 19a zum Vorlaufeingang 18b des weiteren Zangenarm 14b geführt. Zuletzt wird es durch den Rücklaufausgang 19b des weiteren Zangenarm 14b zum Kühlmittelrücklauf 21 zurückgeführt. Über den Kühlmittelrücklauf 21 wird das Kühlmittel aus der Schweißzange 2 entfernt.

Im Rücklauf 21 ist die Unterdruckerzeugungseinheit 11 angeordnet. Zum Wechseln der Schweißkappen 16a, 16b wird der Kugelhahn 8 geschlossen, sodass kein Kühlmittel mehr in die Schweißzange 2 fließen kann und gleichzeitig wird durch die Unterdruckerzeugungseinheit 11 ein Vakuum erzeugt, um Kühlwasser aus der Schweißzange 2 zu pumpen. Sobald jedoch eine der Schweißkappen 16a, 16b entfernt wird, bricht das Vakuum in beiden Schweißzangen 14a, 14b zusammen. Hierdurch könnte Kühlwasser austreten, was zu Korrosion des Werkstücks 3 oder anderen beteiligten Geräten wie zum Beispiel automatischen Kappenwechslern führen kann. Außerdem können Kühlwasserpfützen zu Arbeitsunfällen führen.

Um dies zu verhindern sind Rückschlagventile 22a, 22b, 22c jeweils im Vorlaufeingang 18a, 18b und Rücklaufausgang 19a, 19b angeordnet. Da der Rücklaufausgang 19a des ersten Zangenarms 14a dem Vorlaufeingang 18b des zweiten Zangenarms 14b entspricht, wird hier nur ein Rückschlagventil 22b angeordnet. Durch die Rückschlagventile 22a, 22b, 22c wird ein von der Unterdruckerzeugungseinheit 11 erzeugtes Vakuum automatisch in sämtliche Kühlwasserbereiche der Schweißzange 2 durchgeschleust. Wenn einer der beiden Schweißkappen 16a, 16b entfernt wird, bricht das Vakuum aufgrund der Rückschlagventile 22a, 22b, 22c jeweils nur in dem jeweiligen Zangenarm 14a, 14b zusammen, jedoch nicht im gesamten Kühlmittelkreislauf. Beispielsweise strömt bei Entfernen der Schweißkappe 16b Luft in den Zangenarm 14b. Das Rückschlagventil 22b verhindert, dass die Luft in den ersten Zangenarm 14a gelangt. Durch das Rückschlagventil 22c wird verhindert, dass Kühlwasser aus dem Rücklauf 21 in die Schweißzange fließen. Wenn hingegen die Schweißkappe 16a entfernt wird, verhindert das Rückschlagventil 22a einen Durchfluss der Luft in den Vorlauf 20. Gleichzeitig verhindert das Rückschlagventil 22b, das Kühlwasser aus dem Zangenarm 14b zurückfließt und austritt. Auf diese Weise wird ein Auslaufen von Kühlwasser reduziert beziehungsweise vollständig verhindert. Außerdem können beide Schweißkappen 16a, 16b gleichzeitig entfernt werden. Darüber hinaus wird durch die Rückschlagventile 22a, 22b, 22c verhindert, dass es aufgrund von Bewegungen der Schweißzange 2, Systemschwingungen oder Druckspitzen zu einer unkontrollierten Wasserbewegung kommt, die einen Kühlwasseraustritt zur Folge hätte.

Die Rückschlagventile 22a, 22b, 22c sind dabei nahe an den Schweißarmen angeordnet, insbesondere so nah wie konstruktiv möglich, sodass möglichst wenig Kühlwasser zwischen den Rückschlagventilen 22a, 22b, 22c und innerhalb der Zangenarme 14a, 14b verbleibt. Das Kühlwasser zwischen den Rückschlagventilen 22a, 22b, 22c und den Zangenarmen 14a, 14b kann durch den Absaugzylinder 11 in den Wirkraum 13 des Absaugzylinders bewegt werden. Insbesondere kann der Wirkraum 13 des Absaugzylinders 11 auf das Volumen des Kühlwassers zwischen den Rückschlagventilen 22a, 22b, 22c und den Zangenarmen 14a, 14b angepasst werden.

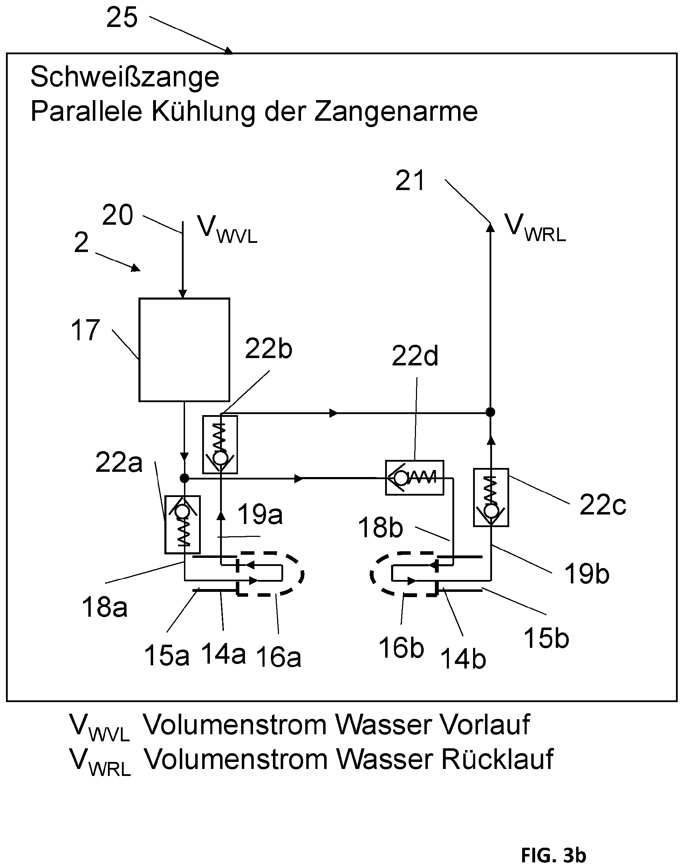

Figur 3b zeigt eine weitere Konfiguration der Vorrichtung zur Kühlmittelversorgung.

Im Gegensatz zu der Vorrichtung zur Kühlmittelversorgung gemäß Figur 3a, werden bei der Vorrichtung zur Kühlmittelversorgung 25 gemäß Figur 3b die Zangenarme 14a, 14b der Schweißzange 2 in einer Parallelschaltung gekühlt. Das Kühlwasser fließt vom Vorlauf 20 durch den Transformator 17 und wird aufgeteilt, sodass es jeweils in den Vorlaufeingang 18a, 18b der Zangenarme 14a, 14b fließt. Anschließend fließt es über die Rücklaufausgänge 19a, 19b zurück in den Rücklauf 21. Entsprechend sind vier Rückschlagventile 22a, 22b, 22c, 22d jeweils in den Vorlaufeingängen 18a, 18b und Rücklaufausgängen 19a, 19b angeordnet, sodass ein Entfernen einer Schweißkappe 16a, 16b lediglich zu einem Zusammenbruch des Vakuums in den jeweiligen Zangenarmen 14a, 14b führt.

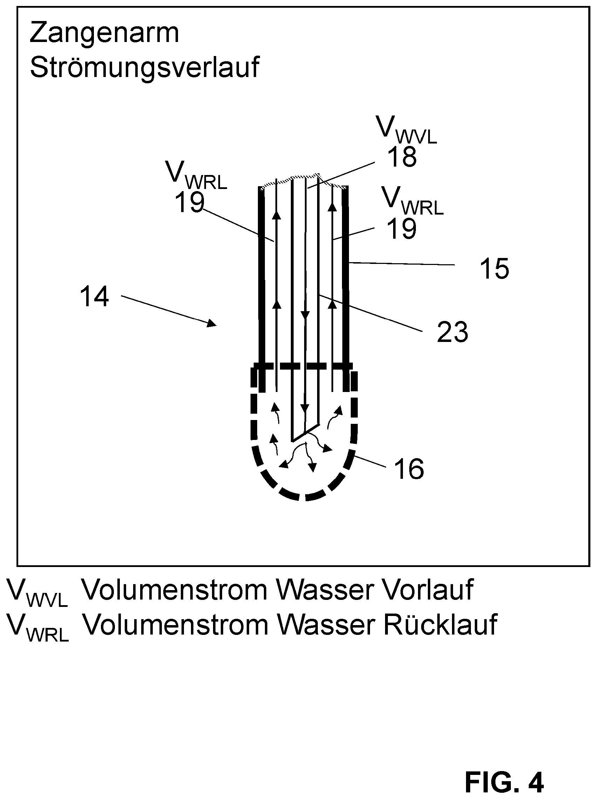

Figur 4 zeigt einen Strömungsverlauf in einem Schweißzangenschaft gemäß einer Ausführungsform der vorliegenden Erfindung.

Der Zangenarm 14 umfasst den Schaft 15, hier in Form eines Schweißzangenschafts, und die Schweißkappe 16. Über den Vorlaufeingang 18 wird Kühlwasser in einem inneren Kühlrohr 23 zu der Schweißkappe 16 geleitet. Dort kühlt es die Schweißkappe 16 und wird anschließend durch den Schaft 15 zum Rücklaufausgang 19 gepumpt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken, aber nur entsprechend dem Gegenstand der folgenden Anspruchen.

### Bezugszeichenliste

- 1: Grundeinrichtung
- 2: Schweißzange
- 3: Werkstück
- 4: Kühlwasserquelle
- 5: Kühlwassersenke
- 6: Signalgeber
- 7: Druckluftquelle
- 8: Kugelhahn
- 9: pneumatischer Drehantrieb
- 10: Rückschlagventil
- 11: Absaugzylinder
- 12: 5/2 Wegeventil
- 13: Wirkraum
- 14: Zangenarm
- 15: Schaft
- 16: Schweißkappe
- 17: Transformator
- 18: Vorlaufeingang
- 19: Rücklaufausgang
- 20: Kühlmittelvorlauf
- 21: Kühlmittelrücklauf
- 22: Rückschlagventile
- 23: Inneres Kühlrohr

## Patentansprüche

1. Vorrichtung zur Kühlmittelversorgung (25) einer mit fluidem Kühlmittel, insbesondere mit Wasser, zu versorgenden Bearbeitungseinrichtung (2), beispielsweise einer Schweißeinrichtung oder eines Schweißroboters, wobei die Bearbeitungseinrichtung (2) zumindest zwei zu kühlende Bereiche oder zu kühlende Werkzeuge (16a, 16b), beispielsweise Schweißkappen, aufweist, wobei die zu kühlenden Bereiche oder die zu kühlenden Werkzeuge (16a, 16b) in einen offenen oder geschlossenen Kühlmittelkreislauf mit Vorlauf (20) und Rücklauf (21) eingebunden sind, wobei im Rücklauf (21) eine Unterdruckerzeugungseinheit (11) angeordnet ist und wobei die zu kühlenden Bereiche oder die zu kühlenden Werkzeuge (16a, 16b) jeweils einen Vorlaufeingang (18a, 18b) und einen Rücklaufausgang (19a, 19b) aufweisen, wobei vor jedem Vorlaufeingang (18a, 18b) und nach jedem Rücklaufausgang (19a, 19b) der zu kühlenden Bereiche oder zu kühlenden Werkzeuge (16a, 16b) jeweils ein Ventil (22a, 22b, 22c, 22d) angeordnet ist,
**dadurch gekennzeichnet, dass** die Unterdruckerzeugungseinheit (11) in Strömungsrichtung hinter jedem der Ventile (22a, 22b, 22c, 22d) so angeordnet ist, dass bei Betätigung der Unterdruckerzeugungseinheit (11) ein Unterdruck im Kühlmittelkreislauf im Vorlaufeingang (18a, 18b) und Rücklaufausgang (19a, 19b) jeder der zu kühlenden Bereiche oder der zu kühlenden Werkzeuge (16a, 16b) entsteht, um ein Vakuum in allen Werkzeugen zu erzeugen, und Kühlwasser aus der Bearbeitungseinrichtung (2) zu pumpen.

2. Vorrichtung (25) nach Anspruch 1, **dadurch gekennzeichnet, dass** die Ventile (22a, 22b, 22c, 22d) vor dem Vorlaufeingang (18a, 18b) und nach dem Rücklaufausgang (19a, 19b) als Rückschlagventile ausgebildet sind.

3. Vorrichtung (25) nach Anspruch 2, **dadurch gekennzeichnet, dass** die Rückschlagventile (22a, 22b, 22c, 22d) einen minimalen Öffnungsdruck von 0,01 Bar, vorzugweise 0,02 bar, insbesondere 0,05 bar aufweisen.

4. Vorrichtung (25) nach einem der Ansprüche 1 bis 3, **dadurch gekennzeichnet, dass** die Ventile (22a, 22b, 22c, 22d) vor dem Vorlaufeingang (18a, 18b) und nach dem Rücklaufausgang (19a, 19b) pneumatisch, elektrisch oder hydraulisch ansteuerbar sind.

5. Vorrichtung (25) nach einem der Ansprüche 1 bis 4, **dadurch gekennzeichnet, dass** der Kühlmittelkreislauf die zu kühlenden Bereiche oder die zu kühlenden Werkzeuge (16a, 16b) in einer Reihenschaltung kühlt.

6. Vorrichtung (25) nach einem der Ansprüche 1 bis 5, **dadurch gekennzeichnet, dass** ein Ventil gleichzeitig im Rücklaufausgang (19a) eines zu kühlenden Bereiches oder zu kühlenden Werkzeugs (16a) und im Vorlaufeingang (18b) eines weiteren zu kühlenden Bereiches oder zu kühlenden Werkzeugs (16b) angeordnet ist.

7. Vorrichtung (25) nach einem der Ansprüche 1 bis 6, **dadurch gekennzeichnet, dass** der Kühlmittelkreislauf die zu kühlenden Bereiche oder die zu kühlenden Werkzeuge (16a, 16b) in einer Parallelschaltung kühlt.

8. Vorrichtung (25) nach einem der Ansprüche 1 bis 7, **dadurch gekennzeichnet, dass** die Unterdruckerzeugungseinheit (11) einen Absaugzylinder oder eine Pumpe umfasst.

9. Kühlwassersystem mit einer Vorrichtung zur Kühlmittelversorgung (25) gemäß einem der Ansprüche 1 bis 8, einer Kühlmittelquelle (4), einer Kühlmittelsenke (5), einem Kühlmittelvorlaufventil (8), einem Kühlmittelrücklaufventil (9), einem Signalgeber (6) und einer Unterdruckerzeugungseinheit (11).

## Claims

1. A device (25) for supplying coolant to a processing device (2), for example a welding device or a welding robot, that is to be supplied with fluid coolant, in particular water, wherein the processing device (2) has at least two areas to be cooled or tools to be cooled (16a, 16b), for example welding caps, wherein the areas to be cooled or the tools to be cooled (16a, 16b) are integrated into an open or closed coolant circuit having a supply side (20) and a return side (21), wherein a vacuum-generating unit (11) is situated in the return side (21), and wherein the areas to be cooled or the tools to be cooled (16a, 16b) have a respective supply inlet (18a, 18b) and a respective return outlet (19a, 19b), wherein in each case a valve (22a, 22b, 22c, 22d) is situated upstream from each supply inlet (18a, 18b) and downstream from each return outlet (19a, 19b) of the areas to be cooled or the tools to be cooled (16a, 16b),
**characterized in that** the vacuum-generating unit (11) is situated downstream from each of the valves (22a, 22b, 22c, 22d) in the flow direction in such a way that when the vacuum-generating unit (11) is actuated, a negative pressure develops in the coolant circuit in the supply inlet (18a, 18b) and the return outlet (19a, 19b) of each of the areas to be cooled or of the tools to be cooled (16a, 16b) in order to generate a vacuum in all tools and to pump cooling water from the processing device (2).

2. The device (25) according to claim 1, **characterized in that** the valves (22a, 22b, 22c, 22d) upstream from the supply inlet (18a, 18b) and downstream from the return outlet (19a, 19b) are designed as check valves.

3. The device (25) according to claim 2, **characterized in that** the check valves (22a, 22b, 22c, 22d) have a minimum opening pressure of 0.01 bar, preferably 0.02 bar, in particular 0.05 bar.

4. The device (25) according to one of claims 1 through 3, **characterized in that** the valves (22a, 22b, 22c, 22d) upstream from the supply inlet (18a, 18b) and downstream from the return outlet (19a, 19b) are pneumatically, electrically, or hydraulically activatable.

5. The device (25) according to one of claims 1 through 4, **characterized in that** the coolant circuit cools the areas to be cooled or the tools to be cooled (16a, 16b) in a series connection.

6. The device (25) according to one of claims 1 through 5, **characterized in that** a valve is simultaneously situated in the return outlet (19a) of one area to be cooled or tool to be cooled (16a), and is situated in the supply inlet (18b) of another area to be cooled or tool to be cooled (16b).

7. The device (25) according to one of claims 1 through 6, **characterized in that** the coolant circuit cools the areas to be cooled or the tools to be cooled (16a, 16b) in a parallel connection.

8. The device (25) according to one of claims 1 through 7, **characterized in that** the vacuum-generating unit (11) includes a suction cylinder or a pump.

9. A cooling water system comprising a device (25) for supplying coolant according to one of claims 1 through 8, a coolant source (4), a coolant sump (5), a coolant supply valve (8), a coolant return valve (9), a signal generator (6), and a vacuum-generating unit (11).

## Revendications

1. Dispositif d'alimentation (25) en fluide de refroidissement d'un dispositif de traitement (2) devant être alimenté en fluide de refroidissement, en particulier en eau, par exemple un dispositif de soudage ou un robot de soudage, dans lequel le dispositif de traitement (2) comprend au moins deux zones à refroidir ou outils à refroidir (16a, 16b), par exemple des capuchons de soudage, dans lequel les zones à refroidir ou les outils à refroidir (16a, 16b) sont intégrés dans un circuit de refroidissement ouvert ou fermé présentant un côté alimentation (20) et un côté retour (21), dans lequel une unité (11) de génération de vide est disposée dans le côté retour (21) et dans lequel les zones à refroidir ou les outils à refroidir (16a, 16b) comprennent chacun une entrée (18a, 18b) côté alimentation et une sortie (19a, 19b) côté retour, dans lequel une vanne (22a, 22b, 22c, 22d) est disposée en amont de chaque entrée (18a, 18b) côté alimentation et en aval de chaque sortie (19a, 19b) côté retour des zones à refroidir ou des outils à refroidir (16a, 16b),
**caractérisé en ce que** l'unité (11) de génération de vide est disposée dans le sens d'écoulement derrière chacune des vannes (22a, 22b, 22c, 22d) de sorte que, lors de l'actionnement de l'unité (11) de génération de vide, une dépression se crée dans le circuit de refroidissement, au niveau de l'entrée (18a, 18b) côté alimentation et de la sortie (19a, 19b) côté retour de chacune des zones à refroidir ou des outils à refroidir (16a, 16b) afin de créer un vide dans tous les outils et de pomper l'eau de refroidissement hors du dispositif de traitement (2).

2. Dispositif (25) selon la revendication 1, **caractérisé en ce que** les vannes (22a, 22b, 22c, 22d) en amont de l'entrée (18a, 18b) côté alimentation et en aval de la sortie (19a, 19b) côté retour sont conçues en tant que clapets anti-retour.

3. Dispositif (25) selon la revendication 2, **caractérisé en ce que** les clapets anti-retour (22a, 22b, 22c, 22d) comprennent une pression d'ouverture minimale de 0,01 bar, de préférence de 0,02 bar, en particulier de 0,05 bar.

4. Dispositif (25) selon l'une des revendications 1 à 3, **caractérisé en ce que** les vannes (22a, 22b, 22c, 22d) en amont de l'entrée (18a, 18b) côté alimentation et en aval de la sortie (19a, 19b) côté retour peuvent être commandées de manière pneumatique, électrique ou hydraulique.

5. Dispositif (25) selon l'une des revendications 1 à 4, **caractérisé en ce que** le circuit de refroidissement refroidit les zones à refroidir ou les outils à refroidir (16a, 16b) dans un montage en série.

6. Dispositif (25) selon l'une des revendications 1 à 5, **caractérisé en ce qu'**une vanne est disposée simultanément à la sortie (19a) côté retour d'une zone à refroidir ou d'un outil (16a) à refroidir et à l'entrée (18b) côté alimentation d'une autre zone à refroidir ou d'un autre outil (16b) à refroidir.

7. Dispositif (25) selon l'une des revendications 1 à 6, **caractérisé en ce que** le circuit de refroidissement refroidit les zones à refroidir ou les outils à refroidir (16a, 16b) dans un montage en parallèle.

8. Dispositif (25) selon l'une des revendications 1 à 7, **caractérisé en ce que** l'unité (11) de génération de vide comprend un cylindre d'aspiration ou une pompe.

9. Système d'eau de refroidissement comprenant un dispositif d'alimentation (25) en fluide de refroidissement selon l'une des revendications 1 à 8, une source (4) de fluide de refroidissement, un puits (5) de fluide de refroidissement, une vanne (8) d'alimentation en fluide de refroidissement, une vanne (9) de retour de fluide de refroidissement, un générateur de signaux (6) et une unité (11) de génération de vide.
